# EUROPÄISCHE PATENTANMELDUNG

(11) **EP 4 123 399 A1**
(43) Veröffentlichungstag der Anmeldung: **25.01.2023**
(21) Anmeldenummer: 21186997.9
(22) Anmeldetag: 21.07.2021
(51) Int. Cl.: G05B 19/409

(54) **VERFAHREN UND KONFIGURATIONSSYSTEM ZUM KONFIGURIEREN EINER MASCHINENSTEUERUNG**

(71) Anmelder: Siemens Aktiengesellschaft, 80333 München (DE)
(72) Erfinder: Bogdoll, Dieter, 80634 München (DE); Geipel, Markus Michael, 80799 München (DE); Hein, Daniel, 81549 München (DE); Kehrer, Johannes, 81829 München (DE); Palacios Valdes, Carlos Andres, 81739 München (DE); Reitinger, Axel, 81377 München (DE); Strixner, Ferdinand, 81739 München (DE)

(57) **Zusammenfassung**

Zum Konfigurieren einer Maschinensteuerung (CTL) durch einen Aktionsausführungsbaum (BT) werden vorgegebene Aktionsmuster (AP) eingelesen. Weiterhin wird eine Vielzahl von Aktionsausführungsbäumen (BT) für eine zu steuernde Maschine (M) generiert. Für einen jeweils generierten Aktionsausführungsbaum (BT) wird eine Performanz (PV) für ein Steuern der Maschine (M) anhand des jeweiligen Aktionsausführungsbaums (BT) ermittelt. Weiterhin werden im jeweiligen Aktionsausführungsbaum (BT) die vorgegebenen Aktionsmuster (AP) gesucht. Ein im jeweiligen Aktionsausführungsbaum (BT) gefundenes Aktionsmuster (AP) wird dann zumindest teilweise durch einen Verweis (L) auf das vorgegebene Aktionsmuster (AP) ersetzt. Ferner wird eine Baumgröße (BG) des so modifizierten Aktionsausführungsbaum (BTM) ermittelt. Anhand der generierten Aktionsausführungsbäume (BT) wird dann mittels eines numerischen Optimierungsverfahrens ein hinsichtlich größerer Performanz und geringerer Baumgröße optimierter Aktionsausführungsbaum (BTO) ermittelt und zum Konfigurieren der Maschinensteuerung (CTL) ausgegeben.

## Beschreibung

Komplexe Maschinen, wie z.B. Roboter, Motoren, Werkzeugmaschinen, Turbinen, 3D-Drucker, Fertigungsanlagen oder Kraftfahrzeuge benötigen für einen produktiven Betrieb in der Regel eine komplex konfigurierte Steuerung, um eine Performanz der gesteuerten Maschine gezielt zu optimieren. Die zu optimierende Performanz kann z.B. eine Leistung, einen Ertrag, einen Ressourcenbedarf, einen Wirkungsgrad, eine Präzision, einen Schadstoffausstoß, eine Stabilität, einen Verschleiß und/oder andere Zielparameter der Maschine betreffen.

Maschinensteuerungen werden häufig während des Designs oder einer Inbetriebnahme der zu steuernden Maschine von Experten konfiguriert. Eine solche Konfiguration durch Experten ist jedoch oft verhältnismäßig zeitaufwändig. Zudem ist in vielen Fällen zusätzlicher Aufwand für eine Optimierung der Konfiguration erforderlich.

Zur automatischen Konfiguration von Maschinensteuerungen werden in zunehmendem Maße datengetriebene Verfahren des maschinellen Lernens verwendet. Mittels derartiger Lernverfahren kann eine Maschinensteuerung darauf trainiert werden, aus aktuellen Betriebssignalen der Maschine diejenigen Steueraktionen abzuleiten, die spezifisch ein gewünschtes oder anderweitig optimales Verhalten der Maschine bewirken. Zu diesen Zwecken steht eine Vielzahl von bekannten maschinellen Lernverfahren, insbesondere Verfahren des bestärkenden Lernens zur Verfügung.

Eine durch datengetriebene Lernverfahren optimierte Konfiguration ist jedoch in vielen Fällen hinsichtlich ihrer Wirkungsbeziehungen durch Experten kaum nachvollziehbar oder interpretierbar. Dies erschwert häufig eine Validierung oder Weiterentwicklung derartiger Konfigurationen.

Es ist Aufgabe der vorliegenden Erfindung, ein Verfahren und ein Konfigurationssystem zum Konfigurieren einer Maschinensteuerung anzugeben, durch die sich besser interpretierbare Konfigurationen automatisch erstellen lassen.

Gelöst wird diese Aufgabe durch ein Verfahren mit den Merkmalen des Patentanspruchs 1, durch ein Konfigurationssystem mit den Merkmalen des Patentanspruchs 13, durch ein Computerprogrammprodukt mit den Merkmalen des Patentanspruchs 14 sowie durch ein computerlesbares Speichermedium mit den Merkmalen des Patentanspruchs 15.

Zum Konfigurieren einer Maschinensteuerung durch einen eine Ausführung von Aktionen durch eine Maschine spezifizierenden Aktionsausführungsbaum werden vorgegebene Aktionsmuster eingelesen. Weiterhin wird eine Vielzahl von Aktionsausführungsbäumen für die Maschine generiert. Die Aktionsausführungsbäume können dabei insbesondere sogenannte Behavior-Trees sein. Für einen jeweils generierten Aktionsausführungsbaum wird eine Performanz für ein Steuern der Maschine anhand des jeweiligen Aktionsausführungsbaums ermittelt. Weiterhin werden im jeweiligen Aktionsausführungsbaum die vorgegebenen Aktionsmuster gesucht. Ein im jeweiligen Aktionsausführungsbaum gefundenes Aktionsmuster wird dann zumindest teilweise durch einen Verweis auf das vorgegebene Aktionsmuster ersetzt. Ferner wird eine Baumgröße des so modifizierten Aktionsausführungsbaum ermittelt. Anhand der generierten Aktionsausführungsbäume wird dann mittels eines numerischen Optimierungsverfahrens ein hinsichtlich größerer Performanz und geringerer Baumgröße optimierter Aktionsausführungsbaum ermittelt und zum Konfigurieren der Maschinensteuerung ausgegeben.

Zum Ausführen des erfindungsgemäßen Verfahrens sind ein Konfigurationssystem, ein Computerprogrammprodukt sowie ein computerlesbares, vorzugsweise nichtflüchtiges Speichermedium vorgesehen.

Das erfindungsgemäße Verfahren sowie das erfindungsgemäße Konfigurationssystem können beispielsweise mittels eines oder mehrerer Computer, Prozessoren, anwendungsspezifischer integrierter Schaltungen (ASIC), digitaler Signalprozessoren (DSP) und/oder sogenannter "Field Programmable Gate Arrays" (FPGA) ausgeführt bzw. implementiert werden.

Aufgrund der zumindest teilweisen Ersetzung von gefundenen Aktionsmustern durch Verweise kann ein Aktionsausführungsbaum in vielen Fällen verkleinert werden. Auf diese Weise kann eine Komplexität des Aktionsausführungsbaums in der Regel verringert werden. Insofern neben der Performanz auch die Baumgröße von Aktionsausführungsbäumen als Optimierungskriterium verwendet wird, kann die Optimierung in Richtung von Aktionsausführungsbäumen getrieben werden, die vorgegebene Aktionsmuster aufweisen. Auf diese Weise kann ein Aktionsausführungsbaum bzw. eine Konfiguration ermittelt werden, die in der Regel sowohl performant ist als auch eine geringe Komplexität aufweist. Konfigurationen mit geringer Komplexität sind in der Regel besser durch Experten interpretierbar und damit leichter validierbar und/oder weiterentwickelbar.

Vorteilhafte Ausführungsformen und Weiterbildungen der Erfindung sind in den abhängigen Ansprüchen angegeben.

Gemäß einer vorteilhaften Ausführungsform der Erfindung kann die Vielzahl von Aktionsausführungsbäumen zumindest teilweise anhand der Aktionsmuster generiert werden. Insbesondere können dabei Aktionsausführungsbäume aus den Aktionsmustern zumindest teilweise zusammengesetzt werden. Auf diese Weise können gezielt Aktionsausführungsbäume generiert werden, die bekannte und/oder leicht interpretierbare Aktionsmuster aufweisen.

Nach einer weiteren vorteilhaften Ausführungsform der Erfindung kann ein vorgegebener initialer Aktionsausführungsbaum eingelesen werden. Die Vielzahl von Aktionsausführungsbäumen kann dann zumindest teilweise ausgehend vom initialen Aktionsausführungsbaum generiert werden. Der initiale Aktionsausführungsbaum kann insbesondere ein von einem Experten erstellter, getesteter und/oder validierter Aktionsausführungsbaum sein. Auf diese Weise können Expertenvorgaben bei der Ermittlung eines optimierten Aktionsausführungsbaums berücksichtigt werden.

Darüber hinaus kann der initiale Aktionsausführungsbaum durch einen Interpreter ausgeführt werden, wobei eine Referenzabfolge von durch den initialen Aktionsausführungsbaum spezifizierten Maschinenaktionen ermittelt wird. Auch die generierten Aktionsausführungsbäume können dann jeweils durch den Interpreter ausgeführt werden, wobei eine jeweilige Abfolge von durch den jeweiligen generierten Aktionsausführungsbaum spezifizierten Maschinenaktionen ermittelt wird. Damit kann ein generierter Aktionsausführungsbaum, dessen jeweilige Abfolge nicht mit der Referenzabfolge übereinstimmt, verworfen werden. Auf diese Weise kann die Optimierung auf Aktionsausführungsbäume eingeschränkt werden, die die Referenzabfolge reproduzieren. Wenn der initiale Aktionsausführungsbaum vorteilhafterweise so gewählt wird, dass die hierdurch spezifizierten Maschinenaktionen oder eine vorgegebene Auswahl dieser Maschinenaktionen nur zulässige oder erforderliche Ziel-Maschinenaktionen umfassen, kann auf diese Weise sichergestellt werden, dass die Optimierung auf Aktionsausführungsbäume beschränkt bleibt, die vorgegebene Entwicklungsziele erfüllen.

Vorzugsweise kann eine vorgegebene Selektionsinformation eingelesen werden, anhand der diejenigen Maschinenaktionen selektiert werden, deren jeweilige Abfolge, insbesondere Referenzabfolge zu ermitteln ist. Auf diese Weise können insbesondere aus den durch den initialen Aktionsausführungsbaum spezifizierten Maschinenaktionen, diejenigen Maschinenaktionen ausgewählt werden, die zwingend auszuführen sind und auf die die Optimierung eingeschränkt werden soll.

Nach einer vorteilhaften Ausführungsform der Erfindung kann das numerische Optimierungsverfahren ein genetisches Optimierungsverfahren sein, durch das auch die Vielzahl von Aktionsausführungsbäumen generiert wird. Das genetische Optimierungsverfahren kann dabei insbesondere durch den initialen Aktionsausführungsbaum initialisiert werden. Für das genetische Optimierungsverfahren kann eine Fitnessfunktion vorgesehen sein, die einer höheren Performanz und/oder einer geringeren Baumgröße eine größere Fitness zuordnet als einer geringeren Performanz und/oder einer größeren Baumgröße. Auf diese Weise kann die Optimierung bevorzugt in Richtung performanter und/oder weniger komplexer Konfigurationen getrieben werden. Zur Durchführung derartiger genetischer Optimierungsverfahren steht eine Vielzahl von effizienten Standardroutinen zur Verfügung.

Nach einer vorteilhaften Ausführungsform der Erfindung kann für die Vielzahl von Aktionsausführungsbäumen eine Pareto-Front ermittelt werden, wobei eine Erhöhung der Performanz sowie eine Verringerung der Baumgröße als Pareto-Zielkriterien verwendet werden. Der optimierte Aktionsausführungsbaum kann dann anhand von Aktionsausführungsbäumen der Pareto-Front abgeleitet werden. Insbesondere kann der optimierte Aktionsausführungsbaum aus Aktionsausführungsbäumen der Pareto-Front selektiert oder interpoliert werden. Während eine Selektion besonders einfach auszuführen ist, können bei einer Interpolation auch mehrere vorteilhafte Eigenschaften von Aktionsausführungsbäumen kombiniert werden. Insofern die Pareto-Front hinsichtlich der Performanz und der Baumgröße ermittelt wird, kann ein optimierter Aktionsausführungsbaum ermittelt werden, der in der Regel sowohl performant ist als auch eine geringe Baumgröße und damit eine geringe Komplexität aufweist. Als Pareto-Front sei in diesem Zusammenhang auch eine Menge von Aktionsausführungsbäumen verstanden, deren Abstand zu einem mathematisch exakten Pareto-Optimum z.B. einen gegebenen Schwellenwert unterschreitet. Durch eine Beschränkung auf Aktionsausführungsbäume der Pareto-Front wird ein Raum möglicher Aktionsausführungsbäume in der Regel erheblich eingeschränkt, wobei insbesondere nicht optimale Aktionsausführungsbäume wegfallen. Die Ermittlung des optimierten Aktionsausführungsbaums sowie ggf. weitergehende Optimierungen können so erheblich vereinfacht werden.

Vorteilhafterweise können Aktionsausführungsbäume der Pareto-Front in das genetische Optimierungsverfahren eingespeist werden. Alternativ oder zusätzlich können nicht in der Pareto-Front enthaltene Aktionsausführungs-bäume verworfen werden. Auf diese Weise kann das genetische Optimierungsverfahren mit vorteilhaften Aktionsausführungsbäumen angereichert werden. Alternativ kann das Optimierungsverfahren nach Ermittlung einer Pareto-Front abgebrochen werden.

Weiterhin können zum Ermitteln der Performanz eines jeweiligen Aktionsausführungsbaums ein Simulationsmodell der Maschine, ein datengetriebenes Modell der Maschine, die Maschine selbst und/oder eine dazu ähnliche Maschine anhand des jeweiligen Aktionsausführungsbaums gesteuert und eine daraus resultierende Performanz der Maschine ermittelt werden. Als Simulationsmodell kann vorzugsweise ein Surrogat-Modell der Maschine verwendet werden, das weniger Rechenressourcen als eine vollständige physikalische Simulation erfordert.

Darüber hinaus kann zum Ermitteln der Baumgröße eine Kantenanzahl, eine Knotenanzahl und/oder eine Baumtiefe des modifizierten Aktionsausführungsbaums oder eine gewichtete Kombination der Kantenanzahl, der Knotenanzahl und/oder der Baumtiefe ermittelt werden. Die vorstehenden Kriterien erlauben eine besonders einfache Bewertung der Baumgröße bzw. der Komplexität eines jeweiligen Aktionsausführungsbaums.

Ein Ausführungsbeispiel der Erfindung wird nachfolgend anhand der Zeichnung näher erläutert. Dabei veranschaulichen jeweils in schematischer Darstellung:
- Figur 1: eine Maschine mit einer Maschinensteuerung zum Steuern der Maschine,
- Figur 2: einen Aktionsausführungsbaum,
- Figur 3: ein erfindungsgemäßes Konfigurationssystem beim Konfigurieren einer Maschinensteuerung und
- Figur 4: ein Modifizieren eines Aktionsausführungsbaums.

Insofern in den Figuren die gleichen oder korrespondierende Bezugszeichen verwendet werden, bezeichnen diese Bezugszeichen die gleichen oder korrespondierenden Entitäten, die insbesondere wie im Zusammenhang mit der betreffenden Figur beschrieben, implementiert oder ausgestaltet sein können.

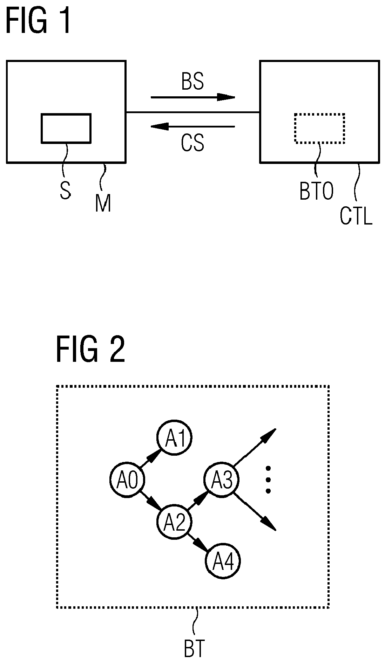

Figur 1 veranschaulicht in schematischer Darstellung eine Maschine M, die mit einer Maschinensteuerung CTL zum Steuern der Maschine M gekoppelt ist. Die Maschine M kann insbesondere ein Roboter, ein Motor, eine Werkzeugmaschine, eine Turbine, eine Fertigungsanlage, ein Kraftfahrzeug, ein 3-D-Drucker, ein Computer, ein mechanisches System, ein elektrisches System oder ein anderes Gerät oder eine andere Anlage sein. Die Maschine M verfügt über eine Sensorik S zum fortlaufenden Messen und/oder Erfassen von Betriebssignalen BS der Maschine M sowie ggf. von Daten aus einer Umgebung der Maschine M.

Die Maschinensteuerung CTL ist rechnergestützt konfigurierbar und kann als Teil der Maschine M oder ganz oder teilweise extern zur Maschine M implementiert sein. Die Maschinensteuerung CTL soll mittels der Erfindung derart konfiguriert werden, dass die Maschine M in optimierter Weise gesteuert wird. Unter einem Steuern sei dabei auch ein Regeln, sowie eine Ausgabe und Verwendung von steuerungsrelevanten, d. h. zur gezielten Beeinflussung der Maschine M beitragenden Daten oder Steuersignalen verstanden.

Im vorliegenden Ausführungsbeispiel soll die Maschinensteuerung CTL mittels eines Verfahrens des maschinellen Lernens, insbesondere eines genetischen Optimierungsverfahrens so konfiguriert werden, dass ein Betrieb der Maschine M abhängig von den erfassten Betriebssignalen BS optimiert wird. Unter dem Begriff Optimieren sei allgemein auch ein Annähern an ein Optimum verstanden. Dabei soll vorzugsweise eine Performanz der Maschine M erhöht werden.

Ein Steuerungsverhalten der Maschinensteuerung CTL wird durch ihre Konfiguration festgelegt. Die Konfiguration umfasst dabei insbesondere einen Aktionsausführungsbaum vorzugsweise in Form eines dem Fachmann bekannten Behavior-Trees, durch den von der Maschine M auszuführende Aktionen und insbesondere Abfolgen von Aktionen spezifiziert werden. Ein Aktionsausführungsbaum wird durch einen baumartig verlinkten gerichteten Graphen dargestellt, der vorzugsweise als baumartig verlinkte Datenstruktur implementiert ist. Zur Interpretation und Ausführung eines Aktionsausführungsbaums bzw. der hierdurch spezifizierten Maschinenaktionen ist eine Vielzahl von effizienten Steuerungsverfahren bekannt und verfügbar.

Figur 2 veranschaulicht einen prinzipiellen Aufbau eines solchen Aktionsausführungsbaums BT, der beispielsweise als Behavior-Tree ausgestaltet sein kann. Der Aktionsausführungsbaum BT umfasst einen gerichteten, baumartig verzweigten Graphen mit mehreren Knoten A0, A1, A2, A3, A4, ..., die durch gerichtete Kanten verbunden sind. Bestimmte Knoten des Graphen repräsentieren dabei Maschinenaktionen, die abhängig von vorgegebenen Bedingungen durch die Maschine M auszuführen sind. Durch die gerichteten Kanten des Graphen können Beziehungen zwischen Bedingungen und bedingt auszuführenden Maschinenaktionen oder eine Abfolge von auszuführenden Maschinenaktionen spezifiziert werden. Ein durch eine Abfolge von auszuführenden Maschinenaktionen bestimmter Prozessfluss verzweigt sich dabei abhängig von den vorgegebenen Bedingungen entlang der Baumstruktur des Graphen. Ein als Behavior-Tree ausgestalteter Aktionsausführungsbaum BT kann insbesondere sog. Fallback-Knottin, Sequence-Knoten, Control-flow-Knoten sowie Dekoratoren wie "always", "guard", "not", "retry", "time limit", "wait for" und/oder "while" umfassen.

Wie Figur 1 weiter veranschaulicht, wird zur optimierten Konfiguration der Maschinensteuerung CTL ein optimierter Aktionsausführungsbaum BTO, vorzugsweise in Form eines optimierten Behavior-Trees zur Maschinensteuerung CTL übermittelt. Ein hierdurch eingestelltes Steuerungsverhalten der Maschinensteuerung CTL wird häufig auch als Policy bezeichnet. Der optimierte Aktionsausführungsbaum BTO wird durch ein erfindungsgemäßes Verfahren ermittelt.

Durch die Sensorik S werden die fortlaufend erfassten Betriebssignale BS der Maschine M zur Maschinensteuerung CTL übermittelt. Die Betriebssignale BS können dabei Angaben über Betriebszustände der Maschine M, über Positionen oder Bewegungen von Komponenten, über Schaltzustände, über Steuerzustände, über Steueraktionen, über physikalische, chemische oder elektrische Messgrößen und/oder über andere für den Betrieb der Maschine M relevante Parameter umfassen.

Abhängig von den übermittelten Betriebssignalen BS werden durch die Maschinensteuerung CTL Steuersignale CS generiert, die von der Maschinensteuerung CTL zum optimierten Steuern der Maschine M zu dieser übermittelt werden. Die Steuersignale CS werden dabei abhängig vom optimierten Aktionsausführungsbaum BTO so generiert, dass eine durch den optimierten Aktionsausführungsbaum BTO spezifizierte Abfolge von Maschinenaktionen ausgeführt wird.

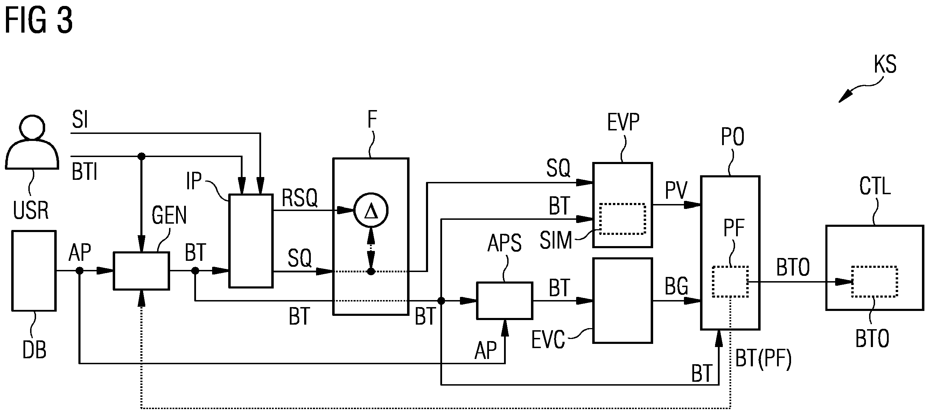

Figur 3 zeigt in schematischer Darstellung ein erfindungsgemäßes Konfigurationssystem KS beim Konfigurieren der Maschinensteuerung CTL.

Die Maschinensteuerung CTL kann einen Teil des Konfigurationssystems KS bilden oder ganz oder teilweise extern zum Konfigurationssystem KS angeordnet sein. Das Konfigurationssystem KS und/oder die Maschinensteuerung CTL weisen einen oder mehrere Prozessoren zur Durchführung des erfindungsgemäßen Verfahrens sowie einen oder mehrere Speicher zum Speichern von zu verarbeitenden Daten auf. Wie oben bereits erwähnt, soll die Maschinensteuerung CTL durch einen optimierten Aktionsaufführungsbaum BTO derart konfiguriert werden, dass die Maschine M in optimierter Weise gesteuert wird. Der optimierte Aktionsausführungsbaum BTO wird dabei durch das Konfigurationssystem KS mittels eines genetischen Optimierungsverfahrens ermittelt.

Als Ausgangspunkt für die Ermittlung des optimierten Aktionsausführungsbaums BTO werden durch das Konfigurationssystem KS vorgegebene Aktionsmuster AP sowie ein initialer Aktionsausführungsbaum BTI vorzugsweise in Form eines Behavior-Trees eingelesen.

Die Aktionsmuster AP können dabei insbesondere Abfolgen von Maschinenaktionen und/oder Bedingungen zu deren Ausführung spezifizieren. Die Aktionsmuster AP werden bevorzugt durch Teilgraphen oder Teilbäume von Aktionsausführungsbäumen oder Behavior-Trees dargestellt. Vorteilhafterweise können als Aktionsmuster AP idiomatische, gut interpretierbare, zuverlässige, validierte und/oder zulässige Aktionsmuster vorgegeben werden, die sich zur Lösung von Steuerungs-Teilaufgaben bewährt haben. Im vorliegenden Ausführungsbeispiel werden die Aktionsmuster AP aus einer Datenbank DB oder aus einer anderweitig verfügbaren Aktionsmusterbibliothek eingelesen.

Der initiale Aktionsausführungsbaum BTI wird vorzugsweise von einem Experten USR nach technischen Vorgaben, Anforderungen oder anderen technischen Nebenbedingungen für die Steuerung der Maschine M erstellt und in das Konfigurationssystem KS eingespeist. Der initiale Aktionsausführungsbaum BTI spezifiziert eine Ausführung zulässiger und/oder erforderlicher Maschinenaktionen und bildet damit eine Referenz für die Steuerung der Maschine M bzw. für eine Zielkonfiguration der Maschinensteuerung CTL. Auf diese Weise kodiert der initiale Aktionsausführungsbaum BTI gewissermaßen Expertenwissen über die Steuerung der Maschine M.

Weiterhin wird vom Experten USR eine Selektionsinformation SI in das Konfigurationssystem KS eingespeist.

Zur Ermittlung eines optimierten Aktionsausführungsbaums BTO wird im vorliegenden Ausführungsbeispiel unter anderem ein genetisches Optimierungsverfahren verwendet. Dabei werden in einem Raum von möglichen Aktionsausführungsbäumen vorteilhafte Aktionsausführungsbäume gesucht und weiter optimiert. Zu diesem Zweck generiert ein Generator GEN des Konfigurationssystems KS - zumindest teilweise zufallsbasiert - eine Vielzahl von Aktionsausführungsbäumen BT, die jeweils eine mögliche Ausführung von Maschinenaktionen durch die Maschine M spezifizieren.

In einer jeweiligen Iteration des genetischen Optimierungsverfahrens wird für die generierten Aktionsausführungsbäume BT jeweils eine sogenannte Fitness der hierdurch spezifizierten Maschinenaktionen bewertet. Aktionsausführungsbäume BT mit höherer Fitness werden mit höherer Wahrscheinlichkeit zur Generierung weiterer Aktionsausführungsbäume BT in einer nachfolgenden Iteration des genetischen Optimierungsverfahrens verwendet. Aktionsausführungsbäume BT mit geringerer Fitness werden entsprechend mit höherer Wahrscheinlichkeit aussortiert und/oder durch neu generierte Aktionsausführungsbäume ersetzt. Auf diese Weise werden durch den Generator GEN zunehmend Aktionsausführungsbäume BT mit höherer Fitness generiert. Im vorliegenden Ausführungsbeispiel wird zur Bestimmung einer jeweiligen Fitness eine Performanz für ein Steuern der Maschine M anhand des zu bewertenden Aktionsausführungsbaums BT, eine Baumgröße dieses Aktionsausführungsbaums BT und/oder eine gewichtete Kombination der Performanz und der Baumgröße ermittelt. Auf diese Weise wird die Generierung der Aktionsausführungsbäume in Richtung größerer Performanz und geringerer Baumgröße getrieben. Zur Durchführung einer solchen genetischen Optimierung ist eine Vielzahl von Standardverfahren verfügbar. Alternativ oder zusätzlich können auch andere Verfahren des maschinellen Lernens zur Optimierung verwendet werden.

Zur Generierung vorteilhafter und/oder zulässiger Aktionsausführungsbäume BT werden der initiale Aktionsausführungsbaum BTI sowie die Aktionsmuster AP in den Generator GEN eingespeist. Die Aktionsausführungsbäume BT werden dann durch den Generator GEN ausgehend vom initialen Aktionsausführungsbaum BTI und unter zumindest teilweiser Verwendung der Aktionsmuster AP generiert.

Die generierten Aktionsausführungsbäume BT werden vom Generator GEN zu einem Interpreter IP des Konfigurationssystems KS übermittelt. In den Interpreter IP werden auch der initiale Aktionsausführungsbaum BTI sowie die Selektionsinformation SI eingespeist.

Der Interpreter IP dient zum Ausführen von Aktionsausführungsbäumen, wobei jeweils eine Abfolge von durch den betreffenden Aktionsausführungsbaum spezifizierten Maschinenaktionen ermittelt wird. Mittels der Selektionsinformation SI werden dabei diejenigen Maschinenaktionen selektiert, die gemäß den technischen Vorgaben zwingend auszuführen sind. Auf diese Weise wird für den initialen Aktionsausführungsbaum BTI durch den Interpreter IP eine Referenzabfolge RSQ von zwingend auszuführenden Maschinenaktionen ermittelt. Weiterhin wird durch den Interpreter IP für jeden generierten Aktionsausführungsbaum BT eine hierdurch spezifizierte Abfolge SQ von Maschinenaktionen ermittelt. Die Referenzabfolge RSQ, die Abfolgen SQ sowie die zugehörigen Aktionsausführungsbäume BT werden zu einem Filter F des Konfigurationssystems KS übermittelt.

Das Filter F dient insbesondere zum Filtern der generierten Aktionsausführungsbäume BT. Zu diesem Zweck wird die für einen jeweiligen Aktionsausführungsbaum BT ermittelte Abfolge SQ mit der Referenzabfolge RSQ verglichen. Falls die Abfolge SQ nicht mit der Referenzabfolge RSQ übereinstimmt, werden diese Abfolge SQ sowie der betreffende Aktionsausführungsbaum BT verworfen und durch das Filter F nicht weitergeleitet. Sofern dagegen die Abfolge SQ mit der Referenzabfolge RSQ übereinstimmt, werden diese Abfolge SQ sowie der betreffende Aktionsausführungsbaum BT durch das Filter F weitergeleitet. Auf diese Weise kann sichergestellt werden, dass die Optimierung auf Aktionsausführungsbäume BT beschränkt bleibt, die vorgegebene Entwicklungsziele erfüllen.

Die vom Filter F weitergeleiteten Aktionsausführungsbäume BT sowie die Aktionsmuster AP werden in ein Aktionsmustersuchmodul APS des Konfigurationssystems KS eingespeist. Das Aktionsmustersuchmodul APS sucht die Aktionsmuster AP in jedem der eingespeisten Aktionsausführungsbäume BT. Falls in einem jeweiligen Aktionsausführungsbaum BT kein Aktionsmuster AP gefunden wird, wird dieser Aktionsausführungsbaum durch das Aktionsmustersuchmodul APS unverändert weitergeleitet. Falls dagegen in einem Aktionsausführungsbaum BT ein Aktionsmuster AP gefunden wird, wird dieser Aktionsausführungsbaum BT durch das Aktionsmustersuchmodul APS modifiziert.

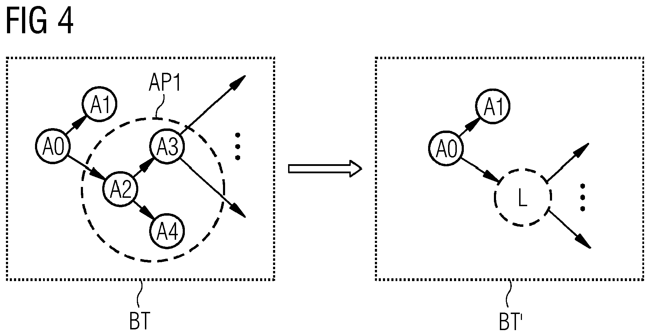

Eine solche Modifikation eines Aktionsausführungsbaums BT wird durch Figur 4 beispielhaft veranschaulicht. Hierzu sei angenommen, dass ein die Knoten A2, A3 und A4 des Aktionsausführungsbaums BT umfassender Teilbaum einem vorgegeben Aktionsmuster AP1 entspricht. Nachdem das Aktionsmuster AP1 im Aktionsausführungsbaum BT gefunden wurde, wird dieser Teilbaum bzw. das Aktionsmuster AP1 im Aktionsausführungsbaum BT durch einen Verweis L auf das Aktionsmuster AP1 ersetzt, wodurch ein modifizierter Aktionsausführungsbaum BT' gebildet wird. Insofern durch den Verweis L mehrere Knoten, hier A2, A3 und A4, sowie Kanten des Aktionsausführungsbaums BT ersetzt werden, wird eine Baumgröße des Aktionsausführungsbaums BT und damit dessen Komplexität verringert.

Aus Übersichtlichkeitsgründen werden modifizierte Aktionsausführungsbäume im Weiteren mit dem gleichen Bezugszeichen BT bezeichnet wie unveränderte Aktionsausführungsbäume.

Wie Figur 3 weiter veranschaulicht, werden die unveränderten oder modifizierten Aktionsausführungsbäume BT vom Aktionsmustersuchmodul APS zu einem Komplexitätsbewerter EVC des Konfigurationssystems KS übermittelt.

Der Komplexitätsbewerter EVC dient dem Zweck, für einen jeweiligen Aktionsausführungsbaum BT eine Baumgröße BG zu quantifizieren. Zu diesem Zweck werden durch den Komplexitätsbewerter EVC Knoten und/oder Kanten eines jeweiligen Aktionsausführungsbaums BT gezählt und/oder dessen Baumtiefe ermittelt und daraus eine Baumgröße BG abgeleitet. Vorzugsweise kann jeweils eine durch vorgegebene Gewichtsfaktoren gewichtete Summe der Knotenanzahl, Kantenanzahl und/oder Baumtiefe ermittelt und als Baumgröße BG ausgegeben werden. Die ermittelte Baumgröße BG wird vom Komplexitätsbewerter EVC zu einem Pareto-Optimierer PO des Konfigurationssystems KS übermittelt.

Darüber hinaus werden die vom Filter F weitergeleiteten Aktionsausführungsbäume BT in einen Performanzbewerter EVP des Konfigurationssystems KS sowie in den Pareto-Optimierer PO eingespeist. In den Performanzbewerter EVP werden weiterhin die vom Filter F weitergeleiteten Abfolgen SQ eingespeist.

Der Performanzbewerter EVP dient dem Zweck, für einen jeweiligen Aktionsausführungsbaum BT eine Performanz der mittels dieses Aktionsausführungsbaums BT gesteuerten Maschine M zu quantifizieren. Auf diese Weise wird gewissermaßen eine Steuerperformanz einer durch diesen Aktionsausführungsbaum BT konfigurierten Maschinensteuerung CTL bewertet.

Die zu ermittelnde Performanz kann insbesondere eine Leistung, einen Ertrag, eine Sollwerteinhaltung, eine Taktrate, eine Produktqualität, eine Geschwindigkeit, einen Zeitbedarf, eine Laufzeit, eine Präzision, eine Fehlerrate, einen Ressourcenverbrauch, einen Wirkungsgrad, eine Effizienz, einen Schadstoffausstoß, eine Stabilität, einen Verschleiß, eine Lebensdauer, ein physikalisches Verhalten, ein mechanisches Verhalten, ein chemisches Verhalten, ein elektrisches Verhalten, eine einzuhaltende Nebenbedingung oder andere zu optimierende Zielparameter der zu steuernden Maschine M betreffen.

Der Performanzbewerter EVP ermittelt für den jeweiligen Aktionsausführungsbaum BT und insbesondere für die zugehörige Abfolge SQ von Maschinenaktionen einen jeweiligen Performanzwert PV, der die Performanz der die Abfolge SQ ausführenden Maschine M quantifiziert. Zu diesem Zweck verfügt der Performanzbewerter EVP über ein Simulationsmodell SIM der Maschine M. Mittels des Simulationsmodells SIM wird ein durch den jeweiligen Aktionsausführungsbaum BT bzw. die jeweilige Abfolge SQ von Maschinenaktionen induziertes Verhalten der Maschine M für eine Vielzahl von Zeitschritten simuliert. Dabei wird eine kumulierte Belohnung oder ein kumulierter Ertrag des simulierten Verhaltens gemessen. Vorzugsweise wird als Simulationsmodell ein sogenanntes Surrogat-Modell, zum Beispiel ein datengetriebenes Modell der Maschine M verwendet, das in der Regel weniger Rechenressourcen als eine detaillierte physikalische Simulation erfordert. Eine auf diese Weise ermittelte kumulierte Belohnung kann als resultierender Performanzwert PV ausgegeben werden.

Der für den jeweiligen Aktionsausführungsbaum BT ermittelte Performanzwert PV wird vom Performanzbewerter EVP zum Pareto-Optimierer PO übermittelt.

Der Pareto-Optimierer PO dient zur Durchführung einer Pareto-Optimierung und insbesondere zur Ermittlung einer Pareto-Front PF für die durch den Komplexitätsbewerter EVC und den Performanzbewerter EVP bewerteten Aktionsausführungsbäume BT.

Eine Pareto-Optimierung ist eine multikriterielle Optimierung, bei der mehrere unterschiedliche Zielkriterien, sogenannte Pareto-Zielkriterien, eigenständig berücksichtigt werden. Als Resultat der Pareto-Optimierung wird eine sogenannte Pareto-Front PF ermittelt. Eine solche Pareto-Front wird häufig auch als Pareto-Menge bezeichnet. Eine Pareto-Front, hier PF, sind diejenigen Lösungen eines multikriteriellen Optimierungsproblems, bei denen ein Zielkriterium nicht verbessert werden kann, ohne ein anderes Zielkriterium zu verschlechtern. Eine Pareto-Front bildet also gewissermaßen eine Menge optimaler Kompromisse. Insbesondere lassen sich nicht in der Pareto-Front enthaltene Lösungen hinsichtlich mindestens eines Zielkriteriums noch verbessern. Infolgedessen fällt durch eine Einschränkung auf die Pareto-Front eine Vielzahl sicher nicht optimaler Lösungen weg. Insofern eine Pareto-Front in der Regel nur einen sehr kleinen Teil eines möglichen Lösungsraums umfasst, reduziert sich durch Einschränkung auf eine Pareto-Front ein nachfolgender Selektions- oder weiterer Optimierungsaufwand beträchtlich.

Erfindungsgemäß wird durch den Pareto-Optimierer PO eine Pareto-Front PF für die Menge der Aktionsausführungsbäume BT ermittelt, wobei eine Erhöhung der Performanz sowie eine Verringerung der Baumgröße als Pareto-Zielkriterien verwendet werden. Als Pareto-Front PF sei dabei auch eine Menge von Aktionsausführungsbäumen verstanden, deren Abstand zu einem mathematisch exakten Pareto-Optimum, zum Beispiel einen gegebenen Schwellwert unterschreitet. Die Optimierung erfolgt in Richtung größerer Performanz und geringerer Baumgröße. Für derartige Pareto-Optimierungen steht eine Vielzahl von Standardroutinen zur Verfügung.

Im vorliegenden Ausführungsbeispiel wird durch den Pareto-Optimierer PO abhängig von den übermittelten Baumgrößen BG und Performanzwerten PV der generierten Aktionsausführungsbäume BT eine Pareto-Front PF innerhalb der generierten Aktionsausführungsbäume BT ermittelt. Aus der resultierenden Pareto-Front PF wird dann ein optimierter Aktionsausführungsbaum BTO selektiert oder interpoliert. Ggf. können bei der Selektion oder Interpolation des optimierten Aktionsausführungsbaums BTO noch vorgegebene Selektionskriterien, insbesondere eines oder mehrere weitere Optimierungskriterien, angewandt werden.

Durch eine Einschränkung einer Selektion, Interpolation bzw. einer nachfolgenden Optimierung auf die Pareto-Front PF wird ein Raum von zu verarbeitenden Aktionsausführungsbäumen in der Regel erheblich eingeschränkt, wobei insbesondere nicht optimale Aktionsausführungsbäume wegfallen. Die Selektion oder Interpolation des optimierten Aktionsausführungsbaums BTO oder auch weitere Optimierungen werden so erheblich vereinfacht.

Optional können Aktionsausführungsbäume BT(PF) der Pareto-Front PF in das genetische Optimierungsverfahren eingespeist werden, um so das genetische Optimierungsverfahren mit vorteilhaften Aktionsausführungsbäumen anzureichern. Eine entsprechende Rückführung von Aktionsausführungsbäumen BT(PF) der Pareto-Front PF vom Pareto-Optimierer PO zum Generator GEN ist in Figur 3 durch einen punktierten Pfeil angedeutet.

Der optimierte Aktionsausführungsbaum BTO wird bestimmungsgemäß zum Konfigurieren der Maschinensteuerung CRL ausgegeben und/oder direkt zur Maschinensteuerung CTL übermittelt, um diese zum optimierten Steuern der Maschine M zu konfigurieren. Die resultierende Konfiguration der Maschinensteuerung CTL führt in der Regel zu einem Steuerverhalten, das gleichzeitig sowohl eine hohe Performanz als auch eine geringe Komplexität aufweist. Die letztgenannte Eigenschaft führt zu Konfigurationen, die meist erheblich besser durch Experten interpretierbar und damit leichter validierbar und/oder weiterentwickelbar sind.

## Patentansprüche

1. Computerimplementiertes Verfahren zum Konfigurieren einer Maschinensteuerung (CTL) durch einen eine Ausführung von Aktionen durch eine Maschine (M) spezifizierenden Aktionsausführungsbaum (BT) wobei
a) vorgegebene Aktionsmuster (AP) eingelesen werden,
b) eine Vielzahl von Aktionsausführungsbäumen (BT) für die Maschine (M) generiert wird,
c) für einen jeweils generierten Aktionsausführungsbaum (BT)
- eine Performanz (PV) für ein Steuern der Maschine (M) anhand des jeweiligen Aktionsausführungsbaums (BT) ermittelt wird und
- die vorgegebenen Aktionsmuster (AP) im jeweiligen Aktionsausführungsbaum (BT) gesucht werden, ein im jeweiligen Aktionsausführungsbaum (BT) gefundenes Aktionsmuster (AP) zumindest teilweise durch einen Verweis (L) auf das vorgegebene Aktionsmuster (AP) ersetzt wird und eine Baumgröße (BG) des so modifizierten Aktionsausführungsbaum (BTM) ermittelt wird, und
d) anhand der generierten Aktionsausführungsbäume (BT) mittels eines numerischen Optimierungsverfahrens ein hinsichtlich größerer Performanz und geringerer Baumgröße optimierter Aktionsausführungsbaum (BTO) ermittelt und zum Konfigurieren der Maschinensteuerung (CTL) ausgegeben wird.

2. Verfahren nach Anspruch 1, **dadurch gekennzeichnet,**
**dass** die Vielzahl von Aktionsausführungsbäumen (BT) zumindest teilweise anhand der Aktionsmuster (AP) generiert wird.

3. Verfahren nach einem der vorhergehenden Ansprüche, **dadurch gekennzeichnet,**
**dass** ein vorgegebener initialer Aktionsausführungsbaum (BTI) eingelesen wird, und
**dass** die Vielzahl von Aktionsausführungsbäumen (BT) zumindest teilweise ausgehend vom initialen Aktionsausführungsbaum (BTI) generiert wird.

4. Verfahren nach einem der vorhergehenden Ansprüche, **dadurch gekennzeichnet,**
**dass** ein vorgegebener initialer Aktionsausführungsbaum (BTI) eingelesen wird,
**dass** der initiale Aktionsausführungsbaum (BTI) durch einen Interpreter (IP) ausgeführt wird, wobei eine Referenzabfolge (RSQ) von durch den initialen Aktionsausführungsbaum (BTI) spezifizierten Maschinenaktionen ermittelt wird,
**dass** die generierten Aktionsausführungsbäume (BT) jeweils durch den Interpreter (IP) ausgeführt werden, wobei eine jeweilige Abfolge (SQ) von durch den jeweiligen generierten Aktionsausführungsbaum (BT) spezifizierten Maschinenaktionen ermittelt wird, und
**dass** ein generierter Aktionsausführungsbaum, dessen jeweilige Abfolge (SQ) nicht mit der Referenzabfolge (RSQ) übereinstimmt, verworfen wird.

5. Verfahren nach Anspruch 4, **dadurch gekennzeichnet,**
**dass** eine vorgegebene Selektionsinformation (SI) eingelesen wird, und
**dass** anhand der Selektionsinformation (SI) diejenigen Maschinenaktionen selektiert werden, deren jeweilige Abfolge (RSQ, SQ) zu ermitteln ist.

6. Verfahren nach einem der vorhergehenden Ansprüche, **dadurch gekennzeichnet,**
**dass** das numerische Optimierungsverfahren ein genetisches Optimierungsverfahren ist, und
**dass** die Vielzahl von Aktionsausführungsbäumen (BT) durch das genetische Optimierungsverfahren generiert wird.

7. Verfahren nach einem der vorhergehenden Ansprüche, **dadurch gekennzeichnet,**
**dass** für die Vielzahl von Aktionsausführungsbäumen (BT) eine Pareto-Front (PF) ermittelt wird, wobei eine Erhöhung der Performanz sowie eine Verringerung der Baumgröße als Pareto-Zielkriterien verwendet werden, und
**dass** der optimierte Aktionsausführungsbaum (BTO) anhand von Aktionsausführungsbäumen der Pareto-Front (PF) abgeleitet wird.

8. Verfahren nach Anspruch 6 und 7 **dadurch gekennzeichnet, dass** Aktionsausführungsbäume der Pareto-Front (PF) in das genetische Optimierungsverfahren eingespeist werden und/oder dass nicht in der Pareto-Front (PF) enthaltene Aktionsausführungsbäume verworfen werden.

9. Verfahren nach einem der vorhergehenden Ansprüche, **dadurch gekennzeichnet,**
**dass** zum Ermitteln der Performanz (PV) eines jeweiligen Aktionsausführungsbaums (BT) ein Simulationsmodell (SIM) der Maschine (M), ein datengetriebenes Modell der Maschine (M), die Maschine (M) selbst und/oder eine dazu ähnliche Maschine anhand des jeweiligen Aktionsausführungsbaums (BT) gesteuert wird und eine daraus resultierende Performanz (PV) der Maschine (M) ermittelt wird.

10. Verfahren nach einem der vorhergehenden Ansprüche, **dadurch gekennzeichnet,**
**dass** zum Ermitteln der Baumgröße (BG) eine Kantenanzahl, eine Knotenanzahl und/oder eine Baumtiefe des modifizierten Aktionsausführungsbaums (BTM) oder eine gewichtete Kombination der Kantenanzahl, der Knotenanzahl und/oder der Baumtiefe ermittelt wird.

11. Verfahren nach einem der vorhergehenden Ansprüche, **dadurch gekennzeichnet,**
**dass** ein jeweiliger Aktionsausführungsbaum (BT) ein Behavior-Tree ist.

12. Verfahren nach einem der vorhergehenden Ansprüche, **dadurch gekennzeichnet,**
**dass** die Maschine (M) ein Roboter, ein Motor, eine Werkzeugmaschine, eine Turbine, eine Fertigungsanlage, ein Kraftfahrzeug, ein 3D-Drucker, ein mechanisches System, ein elektrisches System oder ein anderes Gerät oder eine andere Anlage ist.

13. Konfigurationssystem (KS) zum Konfigurieren einer Maschinensteuerung (CTL) für eine Maschine (M), eingerichtet zum Ausführen eines Verfahrens nach einem der vorhergehenden Ansprüche.

14. Computerprogrammprodukt eingerichtet zum Ausführen eines Verfahrens nach einem der Ansprüche 1 bis 12.

15. Computerlesbares Speichermedium mit einem Computerprogrammprodukt nach Anspruch 14.
